# EUROPÄISCHE PATENTSCHRIFT

(11) **EP 3 069 599 B1**
(45) Veröffentlichungstag und Bekanntmachung des Hinweises auf die Patenterteilung: **07.03.2018**
(21) Anmeldenummer: 16151060.7
(22) Anmeldetag: 13.01.2016
(51) Int. Cl.: A01F 15/08, A01F 15/00, A01F 15/07, A01F 15/14, A01D 41/12

(54) **BALLENPRESSE**
BALING PRESS
PRESSE À BALLES

(30) Priorität: 20.03.2015 DE 102015003700
(43) Veröffentlichungstag der Anmeldung: 21.09.2016
(73) Patentinhaber: PÖTTINGER Landtechnik GmbH, 4710 Grieskirchen (AT)
(72) Erfinder: Baldinger, Markus, 4084 St. Agatha (AT); Pöttinger, Klaus, 4710 Grieskirchen (AT); Prechtl, Wolfgang, 4722 Bruckwaasen (AT); Preimeß, Hans-Jörg, 9811 Lendorf (AT); Zweimüller, Manuel, 4753 Taiskirchen (AT)
(74) Vertreter: Thoma, Michael

(56) Entgegenhaltungen:
- EP-A1- 1 297 734
- EP-A1- 2 090 153
- EP-A1- 2 196 082
- EP-A2- 1 153 538
- DE-A1-102013 108 246
- DE-T2- 60 224 751
- DE-U1- 29 911 916
- GB-A- 1 189 705
- US-A- 4 602 800

## Beschreibung

Die vorliegende Erfindung betrifft eine Ballenpresse mit einem Fahrwerk zum Abstützen am Boden, einem Aufsammler zum Aufsammeln von Erntegut vom Boden, einem Ballenformer zum Formen des aufgesammelten Ernteguts zu Ballen, sowie einem Wickler zum Umwickeln des Ballens mit einem Netz, einer Folie oder dergleichen.

Bei Ballenpressen ist dem Ballenformer regelmäßig ein Wickler nachgeordnet, der einen fertig geformten Ballen mit einem Netz, einer Folie oder einem anderen Wickelmaterial wie beispielsweise einer Schnur oder einer Membran oder dergleichen umwickelt. Solche Wickler können mit dem Ballenformer zusammen auf einem gemeinsamen Maschinenrahmen oder einem Chassisteil angeordnet sein, wobei der Wickler an einer Auswurföffnung des Ballenformers angeordnet sein kann, um die aus der Ballenformkammer ausgeworfenen Erntegutballen zu übernehmen, wobei ggf. zwischen dem Ballenformer und dem Wickler noch ein Übergabeförderer beispielsweise mit einem Auswurf- bzw. Übergabeschlitten und/oder einem Förderband vorgesehen sein kann.

In unebenem Gelände kann es hierbei dazu kommen, dass der Ballen am Wickler nicht in der gewünschten Lage zu liegen kommt, da der Ballen durch Hangabtriebskräfte in seiner Lage beeinflusst wird. Dabei kann der Übergabevorgang an den Wickler selbst gestört werden oder der Ballen kann nach Übergabe an den Wickler auf dem Wicklertisch verrutschen, so dass er dort nicht mehr die gewünschte Lage einnimmt. Als Folge hieraus kommt es zu Störungen beim Wickelvorgang, wobei der Ballen nicht mehr ordnungsgemäß umwickelt werden oder der Wickelvorgang erst gar nicht gestartet werden kann.

Es wurde daher bereits angedacht, die Übergabe des fertig geformten Ballens an den Wickler zu verschieben und den Wickelvorgang im Wickler erst dann zu beginnen, wenn sich die Ballenpresse wieder in ebenem Gelände befindet. Hierdurch wird jedoch die Leistung der Ballenpresse spürbar beeinträchtigt. Zudem kann es bei großflächig geneigtem Gelände dazu kommen, dass die eigentliche Feldbearbeitung unterbrochen und die geneigte Fläche verlassen werden muss, um in entfernterem, ebenem Gelände den Ballen wickeln zu können.

Aus der Schrift DE 299 11 916 U1 ist es ferner bekannt, zur Vermeidung der vorgenannten Probleme eine Hangausgleichseinrichtung vorzusehen, mittels derer der Wickeltisch des Wicklers verkippt bzw. geneigt und somit eine sich in unebenem Gelände eigentlich einstellende Neigung gegenüber einer horizontalen Ebene ausgeglichen werden kann. Hierzu ist der Wickeltisch um eine liegende Querachse schwenkbar gelagert und durch einen Stellaktor verkippbar, der mit Hilfe eines Senklots angesteuert werden kann, um eine möglichst horizontale Ausrichtung des Wickeltischs zu erreichen. Hierdurch kann auch bei steileren Bergauf- oder Bergabfahrten der Ballen auf einem eben ausgerichteten Wickeltisch umwickelt werden. Allerdings wird die Ballenpresse in Längsrichtung recht sperrig und aufwändig, da ein Übergabeförderer, der einen fertig geformten Ballen von der Ballenformkammer zum Wickeltisch fördert, verkippbar ausgebildet werden muss, um einen sich durch die Ausgleichsbewegungen des Wickeltischs einstellenden Höhenunterschied ausgleichen zu können. Zudem verbleibt die Problematik, dass ein Ballen bei Schrägfahrten näherungsweise entlang einer Höhenlinie eines Hangs auf dem Wickeltisch verrutschen bzw. nicht verlässlich an den Wickler übergeben werden kann, da nur Hangneigungen in Fahrtrichtung, d.h. Steigungen und Gefälle ausgeglichen werden können.

Aus der Schrift DE 10 2013 108 246 A1 ist ferner eine Rundballenpresse bekannt, bei der der Ballenformer bzw. dessen Ballenformkammer in der Höhe gegenüber dem Boden verstellt werden kann. Hierzu ist eine Knickdeichsel in Verbindung mit einer von der Fahrwerksachse deutlich beabstandeten Anordnung der Ballenformkammer vorgesehen, so dass ein Abknicken der Knickdeichsel eine Höhenverstellung der Ballenformkammer bewirkt. Diese Höhenverstellbarkeit soll dazu genutzt werden, beim Auswerfen eines Ballens ein ausreichendes Gefälle zum Wickeltisch sicherzustellen und eine Kollision der aufklappbaren Ballenformkammer-Rückwand mit dem Wickler zu vermeiden. Die zuvor geschilderten Probleme hinsichtlich der Ballenübergabe und des Wickelvorgangs bei übermäßigen Hangneigungen wird hierbei jedoch nicht gelöst.

Der vorliegenden Erfindung liegt daher die Aufgabe zugrunde, eine verbesserte Ballenpresse der eingangs genannten Art zu schaffen, die Nachteile des Standes der Technik vermeidet und Letzteren in vorteilhafter Weise weiterbildet. Insbesondere soll ein störungsfreies Wickeln der Ballen auch bei größeren Hangneigungen ermöglicht werden, ohne hierfür einen kompakten, einfachen Maschinenaufbau opfern zu müssen.

Erfindungsgemäß wird die genannte Aufgabe durch eine Ballenpresse gemäß Anspruch 1 gelöst. Bevorzugte Ausgestaltungen der Erfindung sind Gegenstand der abhängigen Ansprüche.

Es wird also vorgeschlagen, Stellbewegungen der Arbeitswerkzeuge der neigungskritischen Funktionsaggregate an die auftretende Hangneigung anzupassen. Je nach auftretender Hangneigung werden die Arbeitswerkzeuge schneller oder langsamer verfahren bzw. stärker oder weniger stark beschleunigt. Erfindungsgemäß zeichnet sich die Ballenpresse aus durch eine Bestimmungseinrichtung zum Bestimmen der Hangneigung und/oder einer Schrägstellung der Ballenpresse im Sinne einer Neigung gegenüber einer Sollausrichtung bei Aufstand auf einer horizontalen Bodenfläche sowie eine Steuervorrichtung zum Steuern der Arbeitsgeschwindigkeit und/oder Beschleunigung zumindest eines Arbeitswerkzeugs des Ballenformers und/oder des Wicklers und/oder eines zwischen Wickler und Ballenformer vorgesehenen Übergabeförderers in Abhängigkeit der bestimmten Hangneigung und/oder Schrägstellung. Die Steuervorrichtung kann dabei je nach Hangneigung bzw. Maschinenschrägstellung die Höchstgeschwindigkeit des Arbeitswerkzeugs erhöhen oder erniedrigen oder auch das für eine Stellbewegung an sich vorgesehene Geschwindigkeitsprofil an die Hangneigung anpassen, beispielsweise je nach Hangneigung sanfter anfahren oder abrupter abremsen, bspw. um den Abwurfvorgang an die Hangneigung anzupassen oder bei einer Anfahrbewegung weniger Beschleunigungen auf den Ballen auszuüben und damit dessen Wegrollneigung zu reduzieren.

Insbesondere kann die Steuervorrichtung die Arbeitsgeschwindigkeit und/oder Beschleunigung des zumindest einen Arbeitswerkzeugs mit zunehmender Hangneigung zunehmend verlangsamt/reduziert ausführen lassen. Hierdurch kann generell die Neigung zu Fehlfunktionen reduziert werden. Alternativ kommt es jedoch für bestimmte Arbeitswerkzeuge und/oder Arbeitsfunktionen jedoch auch in Betracht, die Arbeitsgeschwindigkeit und/oder Beschleunigung mit zunehmender Hangneigung zunehmend zu erhöhen. Beispielsweise kann der Übergabeförderer bei Bergabfahrten den Ballen mit erhöhter Geschwindigkeit auf den Wickeltisch übergeben, um entgegen der Hangabtriebskraft sicherzustellen, dass der Ballen ordnungsgemäß auf den Wickeltisch rollt.

Gemäß der Erfindung ist vorgesehen, dass Wickelelemente des Wicklers von der Steuervorrichtung mit zunehmender Hangneigung quer zur Fahrtrichtung und/oder zunehmender Hangneigung in Fahrtrichtung zunehmend verlangsamt betreibbar sind. Hierdurch kann der Wickelvorgang stabilisiert werden.

Zusätzlich kann ein Fördermittel, insbesondere Förderschlitten und/oder Förderband, des Übergabeförderers von der Steuervorrichtung mit zunehmender Hangneigung in Fahrtrichtung bergab zunehmend schneller und/oder mit zunehmender Hangneigung in Fahrtrichtung bergauf zunehmend verlangsamt betrieben werden.

Das genannte Fördermittel in Form eines Förderschlittens und/oder Förderbands des Übergabeförderers kann dabei von der Steuervorrichtung auch mit zunehmender Hangneigung quer zur Fahrtrichtung zunehmend verlangsamt betreibbar sein.

Alternativ oder zusätzlich zu der Anpassung der Arbeitsgeschwindigkeiten bzw. Beschleunigungen der Funktionsaggregate und deren Arbeitswerkzeuge an die Hangneigung kann auch die Position bzw. Arbeitsstellung zumidest eines Funktionsaggregats der Ballenpresse in Abhängigkeit der Hangneigung bzw. Schrägstellung der Maschine variiert werden, um einen stabileren Betrieb zu ermöglichen. Gemäß einem weiteren Aspekt der Erfindung kann vorgesehen sein, dass eine Fangstellung des Fördermittels des Übergabeförderers relativ zum Ballenformer und/oder eine Abwurfposition des Fördermittels des Übergabeförderers relativ zum Wickler und/oder eine Fangposition des Wickeltischs des Wicklers relativ zum Übergabeförderer und/oder relativ zum Ballenformer in Abhängigkeit der Hangneigung variabel einstellbar ist.

Beispielsweise kann mit zunehmender Hangneigung in Fahrtrichtung bergab der Abstand des Fördermittels des Übergabeförderers vom Ballenformer zunehmend verkleinert und/oder mit zunehmender Hangneigung in Fahrtrichtung bergauf zunehmend vergrößert wird. Dies geht von der Überlegung aus, dass der vom Ballenformer abgelegte Ballen bei stärkeren Hangneigungen je nachdem weiter vorne oder weiter hinten abgelegt wird, so dass ein Bereithalten des Förderschlittens näher am Ballenformer oder weiter weg hiervon dazu führt, dass der Ballen exakt auf den Förderschlitten gegeben wird.

Alternativ oder zusätzlich kann auch die Position des Wicklers, insbesondere der Abstand dessen Wickeltischs vom Ballenformer oder von Übergabeförderer an die Hangneigung angepasst werden. Vorteilhafterweise kann von der Steuervorrichtung mit zunehmender Hangneigung in Fahrtrichtung bergab der Abstand des Wicklers vom Ballenformer zunehmend verkleinert und/oder mit zunehmender Hangneigung in Fahrtrichtung bergauf zunehmend vergrößert werden.

Um Problemen bei stärkeren Hangneigungen zu begegnen, kann die Ballenpresse auch einen Hangneigungsausgleich seiner Funktionsaggregate quer zur Fahrtrichtung und/oder auch in Fahrtrichtung vorzunehmen. Hierzu kann eine Hangausgleichseinrichtung zumindest einen Querneigungs-Stellaktor zum Verkippen des Ballenformers und/oder des Wicklers entgegen einer Hangneigung quer zur Fahrtrichtung umfassen. Hierdurch können Hangneigungen bei Schrägfahrten bzw. Fahrten näherungsweise entlang von Höhenlinien zumindest teilweise kompensiert oder reduziert werden, wodurch Störungen beim Wickelvorgang oder der Übergabe des Ballens an den Wickler auch bei hangparallelen Fahrten besser vermieden werden können.

Der genannte Querneigungsausgleich bzw. das genannte Verkippen quer zur Fahrtrichtung kann dabei in Weiterbildung der Erfindung zusätzlich zu einer Verkippbarkeit des Ballenformers und/oder des Wicklers in Fahrtrichtung vorgesehen sein. Vorteilhafterweise kann die genannte Hangausgleichseinrichtung auch zumindest einen Nickneigungs-Stellaktor zum Verkippen des Ballenformers und/oder des Wicklers um eine liegende, quer zur Fahrtrichtung ausgerichtete Nickachse aufweisen. Durch einen solchen zusätzlichen Hangneigungsausgleich auch in Fahrtrichtung können Probleme bei der Ballenübergabe oder dem Wickelvorgang auch bei Bergauf- oder Bergabfahrten vermieden werden.

Grundsätzlich kommt es hierbei in Betracht, nur den Wickler in der genannten Weise zu verkippen und den vorgeschalteten Ballenformer und ggf. einen dazwischen angeordneten Übergabeförderer unverkippt zu belassen, um das Aufsammeln des Ernteguts vom Boden nicht zu behindern bzw. die Übergabe des von der Aufsammelvorrichtung aufgesammelten Ernteguts an den Ballenformer nicht durch eine zu starke Neigung des Ballenformers gegenüber der Aufsammelvorrichtung zu beeinträchtigen. Alternativ kann die Hangausgleichseinrichtung jedoch ein gemeinsames Verkippen des Ballenformers und des Wicklers vorsehen, so dass beim Neigungsausgleich zumindest kein größerer Winkelversatz zwischen Ballenformer und Wickler entsteht. Dies verbessert die Übergabe eines geformten Ballens vom Ballenformer an den Wickler noch weiter. Zudem vereinfacht sich der Aufbau der Ballenpresse und insbesondere die Hangausgleichseinrichtung beträchtlich, wobei sperrige und konstruktiv aufwändige Übergabevorrichtungen zwischen Ballenformer und Wickler nicht benötigt werden, obwohl gleichwohl ein Übergabeförderer prinzipiell vorgesehen sein kann.

Insbesondere kann in vorteilhafter Weiterbildung der Erfindung eine gemeinsame Lagerung von Ballenformer und Wickler vorgesehen sein. Beispielsweise kann der Wickler an einem Chassisteil befestigt sein, an dem auch der Ballenformer befestigt ist, so dass die vorgenannten Querneigungs- und/oder Nickneigungs-Stellaktoren lediglich das genannte gemeinsame Chassisteil verkippen brauchen, um einen Neigungsausgleich von Ballenformer und Wickler herbeizuführen.

Die vorgenannte Verkippbarkeit des Ballenformers und/oder des Wicklers kann hierbei grundsätzlich in verschiedener Art und Weise erreicht werden. In vorteilhafter Weiterbildung der Erfindung kann ein Neigungsausgleich quer zur Fahrtrichtung bzw. ein Verkippen des Ballenformers und/oder des Wicklers quer zur Fahrtrichtung mit Hilfe eines höhenverstellbaren Fahrwerks erzielt werden, bei dem eine rechte Fahrwerksseite und/oder eine linke Fahrwerksseite unabhängig von und/oder gegenläufig zu einer jeweils anderen Fahrwerksseite höhenverstellt werden kann. Hierbei kann bereits ausreichend sein, wenn nur eine Fahrwerksseite höhenverstellbar ausgebildet ist. Wird beispielsweise eine rechte Fahrwerksseite tiefer ausgefahren, wird die Ballenpresse nach links verkippt, während die Ballenpresse nach rechts verkippt, wenn das genannte rechtsseitige Fahrwerksteil höher eingezogen wird. Vorteilhafterweise können jedoch beide Fahrwerksseiten höhenverstellbar ausgebildet sein, um unabhängig von der Orientierung der Hangneigung ohne Kollisionsprobleme bzw. mit ausreichender Bodenfreiheit einen Neigungsausgleich vornehmen zu können.

Insbesondere kann in Weiterbildung der Erfindung ein Bogey-Fahrwerk vorgesehen sein, bei dem zwei Radachsen nach Art einer Zwillingsachse zusammengefasst und mittels schwenkbarer Achsträger verschwenkbar sein können. Durch Auseinanderschwenken und/oder Zusammenschwenken der Radachsen werden die Räder gegenüber dem Chassisteil, an dem die Achsträger angelenkt sind, höhenverstellt.

Der vorgenannte Querneigungs-Stellaktor der Hangneigungsausgleichseinrichtung kann hierbei ein Schwenkaktor zum Verschwenken der genannten Achsträger sein und beispielsweise in Form eines Druckmittelzylinders an den genannten schwenkbaren Achsträgern angreifen. Insbesondere können die Achsträger an einer gemeinsamen oder zwei separaten, liegend quer zur Fahrtrichtung verlaufenden Schwenkachsen gelagert und durch den Druckmittelzylinder, der an jedem der Achsträger einen von dessen Schwenkachse beabstandeten, gelenkigen Anlenkpunkt besitzen kann, miteinander verbunden sein. Hierdurch kann mit einem einfachen linearen Stellaktor durch Ein- und Ausfahren die Höhe des Bogey-Fahrwerks verstellt werden.

Ein solches höhenverstellbares Fahrwerk kann hierbei nicht nur zum Ausgleichen oder Reduzieren von Querneigungen bzw. zum Verkippen des Ballenformers und/oder des Wicklers quer zur Fahrtrichtung genutzt werden, sondern kann auch dazu dienen, durch gleichläufiges Höhenverstellen der rechten und linken Fahrwerksseite kurzfristig die Bodenfreiheit zu erhöhen, beispielsweise beim Überfahren von Kuppen oder beim Durchfahren von Senken.

Insbesondere kann eine solche Fahrwerks-Höhenverstellung auch dazu genutzt werden, um Nickneigungen des Ballenformers und/oder des Wicklers bei Bergauf- und/oder Bergabfahrten auszugleichen bzw. zu reduzieren, insbesondere auch bei einer Ausbildung der Ballenpresse als Anbaugerät, das über eine Deichsel oder eine andere Anbauvorrichtung an einen Schlepper angebaut werden kann. Betrachtet man den Anbaupunkt bzw. den Deichselanlenkpunkt am Schlepper als höhenfest, kann durch ein Nach-unten-Ausfahren des Fahrwerks und damit ein Höherstellen des Chassis eine Hangneigung bei Bergauffahrten reduziert werden, während umgekehrt bei Bergabfahrten durch ein Absenken des Chassis, d.h. ein Nach-oben-Einziehen des Fahrwerks eine entsprechende Hangneigung ausgeglichen werden kann. Das höhenverstellbare Fahrwerk erfüllt dabei eine Doppelfunktion. Durch einseitiges oder gegenläufiges Höhenverstellen der Fahrwerksseiten bewirkt es eine Kompensation von Querneigungen. Durch gemeinsames, beidseitiges Höhenverstellen bewirkt es eine Kompensation von Längsneigungen.

Alternativ oder zusätzlich kann zum Ausgleich von Nickneigungen bei Bergauf- und Bergabfahrten eine Knickdeichsel vorgesehen sein, mittels derer der Ballenformer und/oder der Wickler um eine liegende, quer zur Fahrtrichtung ausgerichtete Nickachse verkippt werden kann, um Hangneigungen bei Bergauf- und Bergabfahrten auszugleichen. Der vorgenannte Nickneigungs-Stellaktor der Hangausgleichseinrichtung kann hierbei ein die Knickdeichsel verschwenkender Schwenkaktor, beispielsweise in Form eines Druckmittelzylinders sein.

Alternativ oder zusätzlich zu der vorgenannten Höhenverstellbarkeit des Fahrwerks kann ein zumindest teilweiser Ausgleich von Hangneigungen quer zur Fahrtrichtung auch dadurch erreicht werden, dass der Ballenformer und/oder der Wickler gegenüber einem vom Fahrwerk am Boden abgestützten Chassisteil um zumindest eine liegende, in Fahrtrichtung weisende Kippachse verkippbar gelagert ist. Hierbei kann beispielsweise ein starres oder zumindest nicht höhenverstellbares Fahrwerk Verwendung finden, durch das ein Unterteil des Maschinenrahmens bzw. ein unteres Chassisteil immer bodenparallel geführt wird. Ein Neigungsausgleich wird durch Verkippen des Ballenformers und/oder des Wicklers gegenüber diesem unteren Chassisteil herbeigeführt.

Das Verkippen des Ballenformers und/oder des Wicklers entgegen der jeweiligen Hangneigung, um eine möglichst horizontale Ausrichtung zu erreichen, kann dabei grundsätzlich manuell gesteuert bzw. betätigt werden. Vorteilhafterweise kann jedoch auch eine halbautomatische oder vollautomatische Ansteuerung der Hangneigungsausgleichseinrichtung vorgesehen sein.

Dabei kann in Weiterbildung der Erfindung eine Steuervorrichtung vorgesehen sein, die die Hangneigungsausgleichseinrichtung in Abhängigkeit des Betriebszustands des Ballenformers und/oder des Wicklers ansteuert, insbesondere derart, dass der Ballenformer und/oder der Wickler nur vorübergehend entgegen der Hangneigung verkippt wird, wenn dies für eine Ballenübergabe vom Ballenformer an den Wickler und/oder für einen Wickelvorgang notwendig ist. Insbesondere kann die genannte Steuervorrichtung einen Betätiger zum nur zeitlich begrenzten Verkippen des Ballenformers und/oder des Wicklers während einer Ballenübergabe vom Ballenformer an den Wickler und/oder während eines Ballenwickelvorganges aufweisen. Wenn der Wickler inaktiv ist und/oder der Ballenformer noch keinen Ballen auswirft und/oder sich noch nicht dem Ende eines Ballenformzyklus nähert, kann der genannte Betätiger die Hangneigungsausgleichseinrichtung deaktivieren und/oder noch kein Verkippen herbeiführen und/oder den Ballenformer und/oder Wickler in einer hangparallelen Ausrichtung halten. Wird jedoch die Wickelvorrichtung aktiviert und/oder eine Ballenübergabe vom Ballenformer an den Wickler initiiert und/oder nähert sich der Ballenformer dem Ende eines Ballenformzyklus, kann der Betätiger die Hangneigungsausgleichseinrichtung betätigen, um den Ballenformer und den Wickler entgegen der Hangneigung zu verkippen, um einen Ausgleich der Hangneigung zu erzielen. Sobald der Wickelvorgang abgeschlossen ist, kann das Verkippen des Ballenformers und/oder Wicklers wieder rückgängig gemacht werden, um die Übergabe des Ernteguts vom Aufsammler an den Ballenformer möglichst wenig zu behindern. Vorteilhafterweise werden der Ballenformer und/oder der Wickler entgegen der Hangneigung nur in einem relativ engen Zeitfenster um die Ballenübergabe und/oder den Wickelvorgang herum verkippt und in der übrigen Betriebszeit in ihrer unverkippten Neutralstellung gehalten.

Alternativ zu einer solchen nur zeitlich begrenzten Verkippung zum Neigungsausgleich kann die Steuervorrichtung jedoch auch kontinuierlich arbeiten bzw. die auftretende Hangneigung stets ausgleichen und die Neigungs-Stellaktoren während des Betriebs nicht nur in bestimmten Zeitfenstern ansteuern. Berücksichtigt die Steuervorrichtung dabei über das Signal des Neigungssensors hinaus noch weitere Betriebsparameter der Ballenpresse, insbesondere einen oder mehrere Betriebszustandsparameter des Ballenformers oder Wicklers, kann dies beispielsweise auch dergestalt ausgeführt werden, dass die Steuervorrichtung die Stärke der Gegenneigung bzw. den Grad des Neigungsausgleichs an den Betriebszustand der Ballenpresse anpasst. Bei einer Ballenpresse kann eine stärkere Neigungskompensation vorgesehen werden, wenn der Wickler in Betrieb ist und/oder ein Ballen übergeben werden soll, und eine schwächere Neigungskompensation vorgesehen werden, wenn der Wickler außer Betrieb ist und kein Ballen übergeben wird und/oder der Ballenformer in Betrieb ist.

Vorteilhafterweise wird die Hangneigungsausgleichseinrichtung hierbei unter Berücksichtigung der Richtung und/oder Stärke der Hangneigung betätigt. Die genannten Steuermittel steuern die Neigungsaktoren der Hangneigungsausgleichseinrichtung dabei insbesondere derart an, dass eine möglichst horizontale Ausrichtung des Ballenformers und/oder des Wicklers erzielt wird.

Die vorgenannte Bestimmungseinrichtung zum Bestimmen der Hangneigung, in Abhängigkeit derer die Stellgeschwindigkeiten der Arbeitswerkzeuge oder deren Beschleunigungen oder auch die Positionen der Funktionsaggregate korrigiert bzw. ein Hangneigungsausgleioch herbeigeführt wird, kann eine Abweichung des Ballenformers und/oder des Wicklers gegenüber einer horizontalen Ausrichtung bestimmen, beispielsweise mit Hilfe eines Lotpendels und/oder einer Wasserwaage und/oder eines Absolutneigungssensors. Die genannten Steuermittel können die Neigungs-Stellaktoren der Hangneigungsausgleichseinrichtung dabei derart ansteuern, dass die bestimmte Abweichung gegenüber der horizontalen Ausrichtung möglichst klein wird.

Der vorgenannte Neigungssensor zum Erfassen der Neigung der Ballenpresse kann grundsätzlich verschieden ausgebildet sein. Beispielsweise kann der Neigungssensor eine in einem schalenförmigen Käfig angeordnete Kugel umfassen, deren Position in der Käfigschale elektronisch erfasst wird, oder ein Federmassesystem umfassen, bei dem die Auslenkung einer kleinen Testmasse in Abhängigkeit von der Lage elektronisch erfasst wird.

Insbesondere kann in vorteilhafter Ausbildung der Erfindung ein elektronischer Neigungssensor vorgesehen sein, der eine dielektrische Flüssigkeit enthält, deren Lage bzw. Pegel in einem Aufnahmebehältnis kapazitiv oder induktiv erfasst werden kann. Ein solcher Neigungssensor hat ein äußerst rasches Ansprechverhalten und kann auch bei holprigem Feldbetrieb verlässlich die Neigung der Ballenpresse erfassen.

In vorteilhafter Weiterbildung der Erfindung kann der zumindest eine Neigungssensor dabei mehrachsig arbeitend ausgebildet sein und/oder es können mehrere Neigungssensoren zur mehrachsigen Neigungserfassung vorgesehen sein, um die Neigung des Maschinenraums im Raum bezüglich mehrerer Achsen erfassen zu können. Insbesondere kann mittels des zumindest einen Neigungssensors eine Querneigung des Maschinenaufbaus nach rechts und links quer zur Fahrtrichtung und eine Nickneigung nach vorne und hinten in Fahrtrichtung jeweils gegenüber einer Vertikalen erfasst werden.

Gegebenenfalls kann aber auch nur mit einem oder mehreren einachsigen Neigungssensoren gearbeitet werden, die nur eine Neigung in einer Ebene erfassen. Dies kann insbesondere dann ausreichend sein, wenn die Ballenpresse nur einen einachsigen Neigungsausgleich vorsieht, insbesondere in einer Ebene senkrecht zur Fahrtrichtung bzw. ein Verkippen des Maschinenaufbaus quer zur Fahrtrichtung nach rechts und links. Der einachsige Neigungssensor wird dann vorteilhafterweise derart angeordnet, dass eine Neigung des Maschinenrahmens quer zur Fahrtrichtung nach rechts und links erfasst wird.

Der zumindest eine Neigungssensor kann hierbei grundsätzlich an verschiedener Stelle der Ballenpresse angebracht sein, beispielsweise unmittelbar am Maschinenrahmen oder einem damit verbundenen Abschnitt des Maschinenaufbaus, wobei der Neigungssensor vorteilhafterweise im Inneren eines Gehäuseteils aufgenommen sein kann, um den Sensor vor äußeren Beschädigungen zu schützen.

Der zumindest eine Neigungssensor kann hierbei eine Abweichung der Ausrichtung des Maschinenrahmens gegenüber der Vertikalen und/oder gegenüber einer horizontalen Ebene erfassen. Die elektronische Steuervorrichtung steuert dabei die Neigungs-Stellaktoren im Sinne einer Regelung derart an, dass die erfasste Abweichung gegen Null geht, d.h. der Maschinenrahmen möglichst in seine Sollausrichtung wie auf horizontalem Feld kommt, soweit dies vorbestimmte Verkippungsgrenzen für die Verkippung des Maschinenrahmens gegenüber dem Fahrwerk zulassen.

Die Erfindung wird nachfolgend anhand bevorzugter Ausführungsbeispiele und zugehöriger Zeichnungen näher erläutert. In den Zeichnungen zeigen:

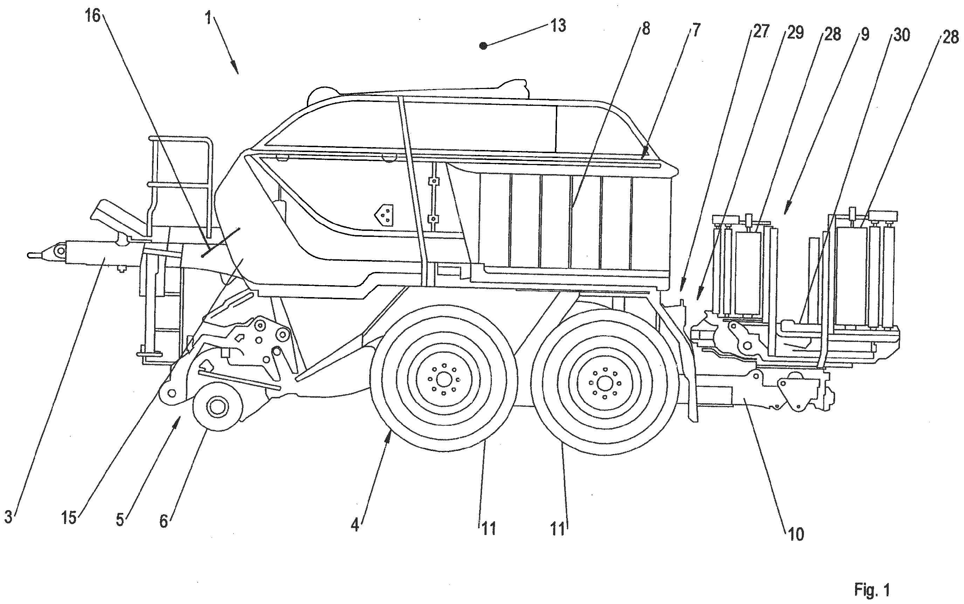

- Fig. 1:: eine schematische Seitenansicht einer Ballenpresse mit einem der Ballenformkammer des Ballenformers nachgeordneten Wickler gemäß einer vorteilhaften Ausführung der Erfindung,

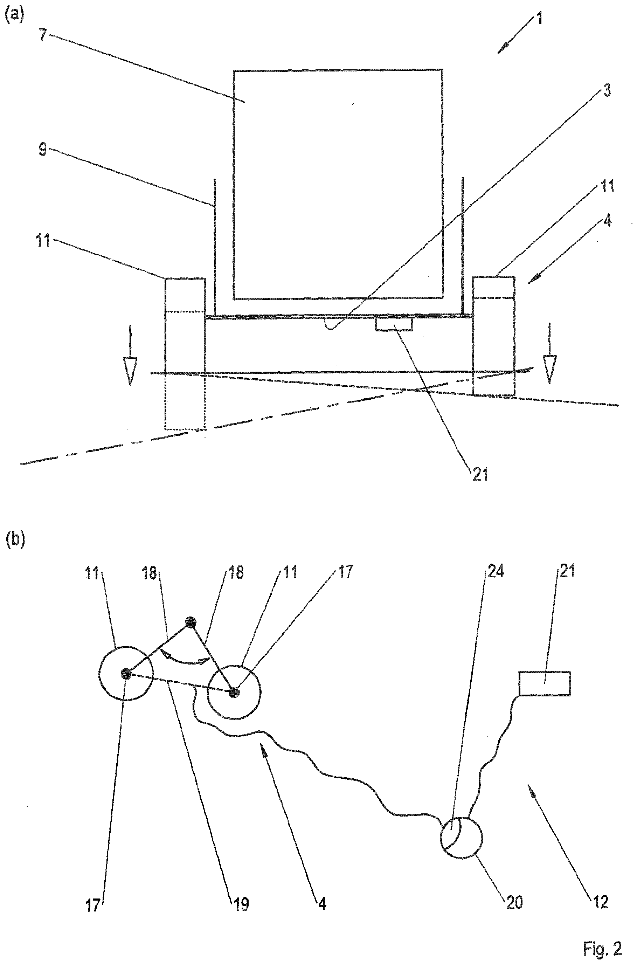

- Fig. 2:: eine schematische Rückansicht der Ballenpresse aus Fig. 1 in der Teilansicht (a), in der ein höhenverstellbares Bogey-Fahrwerk in verschiedenen Höhenstellungen für verschiedene Hangneigungen gezeigt ist, sowie eine schematische Seitenansicht des genannten Bogey-Fahrwerks in der Teilansicht (a), die die Höhenverstellbarkeit des Fahrwerks durch Verschwenken der Achsträger zeigt,

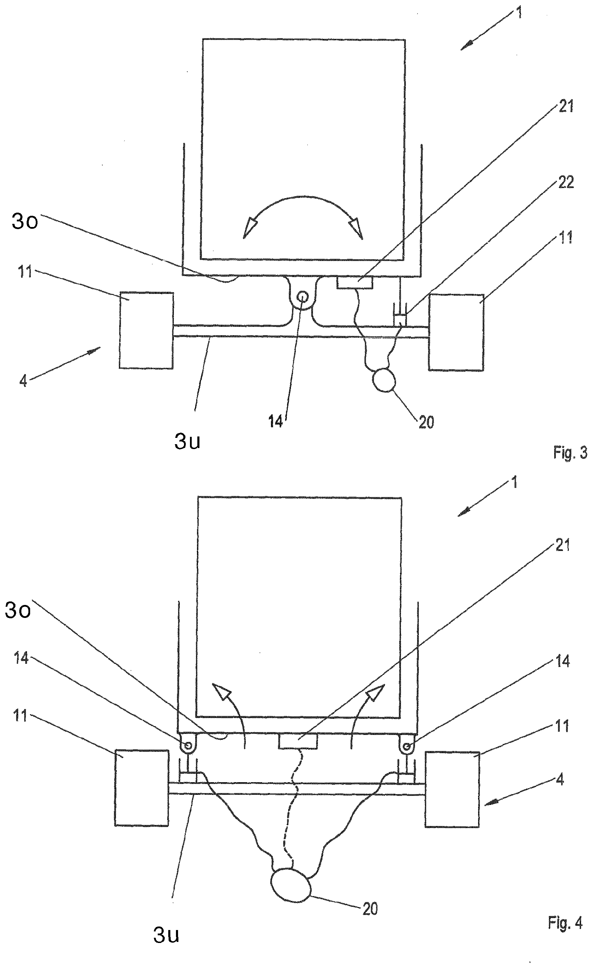

- Fig. 3:: eine schematische Rückansicht der Ballenpresse aus Fig. 1 gemäß einer alternativen Ausführung der Erfindung, bei der ein den Ballenformer und den Wickler tragendes Chassis-Oberteil gegenüber einem Chassis-Unterteil um eine liegende, in Fahrtrichtung weisende Kippachse querverkippbar ist, und
- Fig. 4:: eine schematische Rückansicht der Ballenpresse ähnlich den Figuren 2 und 3, wobei gemäß einer weiteren Ausführung der Erfindung ein Chassis-Oberteil, das den Ballenformer und den Wickler trägt, beidseitig rechts und links gelenkig höhenverstellbar auf einem Chassis-Unterteil abgestützt ist, um durch einseitige Höhenverstellung einen Neigungsausgleich zu erzielen.

Wie Fig. 1 zeigt, kann die Ballenpresse 1 als Anbaugerät ausgebildet sein, das an einen nicht eigens gezeigten Schlepper anbaubar ist, beispielsweise mittels einer Deichsel 2, die mit einem Maschinenrahmen 3 verbunden ist, der durch ein Fahrwerk 4 am Boden abgestützt ist.

An dem Maschinenrahmen 3 kann ein Aufsammler 5 zum Aufsammeln von Erntegut vom Boden aufgehängt sein, wobei der genannte Aufsammler 5 beispielsweise in Form einer Pickup mit einer umlaufend antreibbaren Stachelwalze und einem nachgeschalteten Förderrotor ausgebildet sein kann, um Erntegut wie Heu, Stroh oder Gras vom Boden aufzusammeln. Der genannte Aufsammler 5 kann hierbei durch ein Tastfahrwerk 6 über den Boden geführt und gegenüber dem Maschinenrahmen 3 verschwenkbar sein.

Das vom Aufsammler 5 vom Boden aufgesammelte Erntegut wird an einen Ballenformer 7 übergeben, der in an sich bekannter Weise eine Ballenformkammer 8 aufweisen kann, in der mittels umlaufender Riemen und/oder umlaufender Walzen hereinkommendes Erntegut zu einem Ballen geformt werden kann. Der genannte Ballenformer 7 einschließlich seiner Ballenformkammer 8 kann auf dem genannten Maschinenrahmen 3 gelagert sein.

Dem genannten Ballenformer 7 nachgeordnet ist ein Wickler 9, an den der Ballenformer 7 einen fertig geformten Ballen übergeben kann. Der genannte Wickler 9 kann den Ballen mit einem Netz, einer Folie oder einem anderen Umwicklungsmaterial umwickeln, bevor der umwickelte Ballen dann auf dem Boden abgelegt wird. Der genannte Wickler 9 kann hierzu in an sich bekannter Weise einen Wickeltisch 30 und hier herum angeordnete Wickelelemente 28 bspw. in Form von Wickelwalzen aufweisen, vgl. Fig. 1.

Ferner kann zwischen dem Wickler 9 und dem Ballenformer 7 ein Übergabeförderer 27 mit einem Föderschlitten vorgesehen sein, der nach Art eines Shuttles zwischen dem Ballenformer 7 und dem Wickler 9 hin- und hergefahren werden kann, um den Ballen entsprechend zu übergeben.

Der genannte Wickler 9 kann vorteilhafterweise mittels eines Wickelvorrichtungsträgers 10 an dem Maschinenrahmen 3 gelagert sein, so dass der Wickler 9 und der Ballenformer 7 gemeinsamen am Maschinenrahmen 3 bzw. einem Chassisteil des Maschinenrahmens 3 gelagert sind. Der Wickelvorrichtungsträgers 10 kann dabei ein- und austeleskopierbar oder am Maschinenrahmen 3 verschieblich gelagert sein, um den Abstand des Wicklers 9 von dem Ballenformer 7 variieren zu können, was mittels eines von der Steuervorrichtung 20 ansteuerbaren Stellaktors erfolgen kann.

Um bei Bergauf- und Bergabfahrten und Hangschrägfahrten entstehende Neigungen des Ballenformers 7 und des Wicklers 9 im Sinne von Abweichungen gegenüber einer horizontalen Solllage berücksichtigen zu können, passt die Steuervorrichtung 20 Stellbewegungen der Arbeitswerkzeuge der neigungskritischen Funktionsaggregate an die auftretende Hangneigung an, wie dies eingangs ausführlich erläutert wurde. Je nach auftretender Hangneigung werden die Arbeitswerkzeuge des Ballenformers 7 und/oder des Übergabeförderers 27 und/oder des Wicklers 9 schneller oder langsamer verfahren bzw. stärker oder weniger stark beschleunigt.

Zusätzlich kann ggf. kann der Maschinenrahmen 3 mit den daran gelagerten Ballenformer 7 und Wickler 9 gegenüber der Bodenaufstandsfläche, die von den Rädern 11 des Fahrwerks 4 definiert wird, auch noch verkippt werden, was mittels einer Hangneigungsausgleichseinrichtung 12 bewerkstelligt wird, um übermäßigen Hangneigungen entgegen zu wirken. Dies kann beispielsweise ergänzend vorgenommen werden, wenn die Anpassung von Geschwindigkeit und Beschleunigung der vorgenannten Arbeitswerkzeuge an die Hangneigung nicht mehr ausreicht, um die Maschinenfunktion stabil zu halten. Umgekehrt kann die Steuervorrichtung die Stellbewegungen der Arbeitswerkzeuge der neigungskritischen Funktionsaggregate an die auftretende Hangneigung anpassen wie dies eingangs ausführlich erläutert wurde, wenn ein Gegenneigen der Funktionsaggregate entgegen der Hangneigung bzw. der genannte Neigungsausgleioch an seine Grenzen stößt, beispielsweise ein maximales Gegenneigen vorgenommen wurde, der Wickler und/oder der Ballenformer aber immer noch eine Neigung aufweist.

Der Maschinenrahmen 3 mit den davon getragenen Elementen Ballenformer 8 und Wickler 9 kann hierbei mehrachsig verkippt werden, insbesondere um eine Nickneigungs-Kippachse 13, die sich liegend quer zur Fahrtrichtung erstreckt, und um eine Querneigungs-Kippachse 14, die sich liegend etwa in Fahrtrichtung erstreckt.

Um bei Bergauf- und Bergabfahrten entstehende Hangneigungen reduzieren zu können, kann auch eine gegenläufige Verkippung um die genannte Nickneigungs-Kippachse 13 vorgenommen werden. Hierzu kann die genannte Deichsel 2 als Knickdeichsel ausgebildet sein, die um eine liegende, quer zur Fahrtrichtung verlaufende Knickdeichselachse 15 gegenüber dem Maschinenrahmen 3 abgeknickt werden kann, wobei dies durch einen Nickneigungsstellaktor 16 beispielsweise in Form eines an der Knickdeichsel angreifenden Druckmittelzylinders erfolgen kann. Alternativ oder zusätzlich zu der genannten Knickdeichsel kann das Fahrwerk 4 gegenüber dem Maschinenrahmen 3 höhenverstellt werden, wobei durch gleichsinnige Verstellung der rechten und linken Fahrwerkshälften ein Nicken um den Anlenkpunkt der Deichsel 3 am Schlepper herbeigeführt werden kann.

Wie Fig. 2 (b) zeigt, kann das Fahrwerk 4 hierbei als zweiachsiges Bogey-Fahrwerk ausgebildet sein, bei dem die Radachsen 17 zweier paarweise zusammengefasster Räder 11 an schwenkbaren Achsträgern 18 aufgehängt sind. Die genannten Achsträger 18 können hierbei vorteilhafterweise um eine gemeinsame liegende Querachse schwenkbar am Maschinenrahmen 3 angelenkt sein und durch einen Fahrwerksstellaktor 19 relativ zueinander verschwenkt werden, so dass die Räder 11 näher zusammen und weiter voneinander weg verstellt werden können, wodurch sich die Höhenlager der Räder 11 relativ zum Maschinenrahmen 3 ändert. Anstelle einer gemeinsamen Schwenkachse können die genannten Achsträger 18 auch an separaten liegenden Querachsen am Maschinenrahmen 3 angelenkt sein.

Vorteilhafterweise können die rechten und linken Fahrwerksseiten unabhängig voneinander und/oder gegenläufig zueinander höhenverstellt werden. Hierzu können die genannten Fahrwerksstellaktoren 19, die rechten und linken Seiten des genannten Bogey-Fahrwerks zugeordnet sind, von der Hangneigungsausgleichseinrichtung 12 bzw. einer dieser zugeordneten Steuervorrichtung 20 unabhängig voneinander angesteuert werden bzw. unabhängig betätigt werden, so dass wahlweise eine Fahrwerksseite oder beide Fahrwerksseiten abgesenkt oder angehoben werden kann, wie dies Fig. 2 (a) verdeutlicht. Hierdurch können Hangneigungen quer zur Fahrtrichtung ausgeglichen bzw. zumindest reduziert werden. Der Maschinenrahmen 3 sowie die darauf angeordneten Elemente Ballenformer 8 und Wickler 9 werden hierdurch gegenläufig zur Hangneigung, also insbesondere bergwärts verkippt und möglichst horizontal ausgerichtet gehalten.

Die Steuervorrichtung 20 der Hangneigungsausgleichseinrichtung 12 kann hierbei von einer Neigungsbestimmungsvorrichtung 21 ein Signal erhalten, das die Hangneigung und/oder die Abweichung der Maschinenrahmenausrichtung von einer horizontalen Ausrichtung angibt. In Abhängigkeit der bestimmten Neigung und/oder der bestimmten Abweichung von der horizontalen Ausrichtung kann die Steuervorrichtung 20 die Fahrwerksstellaktoren 19 und/oder den Nickneigungsstellaktor 16 für die Knickdeichsel ansteuern, um eine möglichst horizontale Ausrichtung aufrecht zu erhalten.

Vorteilhafterweise kann die Steuervorrichtung 20 hierbei den Betriebszustand des Ballenformers 7 und/oder des Wicklers 9 berücksichtigen und eine zur Hangneigung gegenläufige Verkippung des Maschinenrahmens 3 nur dann veranlassen, wenn eine Ballenübergabe vom Ballenformer 7 an den Wickler 9 durchgeführt wird bzw. ansteht und ein Wickelvorgang am Wickler 9 durchgeführt wird, wie dies eingangs erläutert wurde.

Wie Fig. 3 zeigt, kann alternativ oder zusätzlich zu einer Querneigungsverstellung durch Höhenverstellung der Fahrwerksseiten des Fahrwerks 4 auch eine verkippbare Lagerung des Maschinenrahmens 3 vorgesehen sein. Genauer gesagt kann ein Chassis-Oberteil 3o des Maschinenrahmens 3, an dem der Ballenformer 7 und der Wickler 9 befestigt sind, gegenüber einem Chassis-Unterteil 3u des Maschinenrahmens 3 um eine liegende in Fahrtrichtung weisende Querneigungskippachse 14 verkippt werden. Die genannte Querneigungskippachse 14 kann hierbei ortsfest an den beiden Chassisteilen 3o und 3u befestigt sein und sich insbesondere in einer vertikalen Längsmittelebene der Ballenpresse 1 erstrecken.

Ein Querneigungsstellaktor 22 kann das genannte Chassis-Oberteil 3o und damit den Ballenformer 7 und den Wickler 9 um die Querneigungskippachse 17 verkippen, wobei der genannte Querneigungsstellaktor 22 beispielsweise ein Druckmittelzylinder sein kann, der von der Kippachse 14 beabstandet zwischen die Chassis-Ober- und -Unterteile geschaltet ist. Der genannte Querneigungsstellaktor 22 kann von der genannten Steuervorrichtung 20 in der beschriebenen Weise angesteuert werden, um quer zur Fahrtrichtung auftretenden Hangneigungen möglichst weitgehend auszugleichen, wenn eine Ballenübergabe oder ein Wickelvorgang durchgeführt wird.

Wie Fig. 4 zeigt, kann das Chassis-Oberteil 3o auch um verschiedene Querneigungs-Kippachsen 14 quer zur Fahrtrichtung verkippt werden, wobei sich die genannten mehreren Querneigungs-Kippachsen 14 von einer vertikalen Längsmittelebene der Ballenpresse 1 beabstandet erstrecken können, beispielsweise an rechten und linken Randabschnitten des Maschinenrahmens 3. Die genannten Querneigungskippachsen 14 können hierbei vorteilhafterweise durch daran gelenkig angelenkte Querneigungsstellaktoren 22 gegenüber dem Chassis-Unterteil 3u ausgehoben werden, so dass wahlweise ein Verkippen um die linke Kippachse oder um die rechte Kippachse vorgenommen werden kann. Hierdurch kann gleichermaßen eine quer zur Fahrtrichtung gegebene Hangneigung ausgeglichen bzw. reduziert werden. Von Vorteil ist hierbei, dass es hierbei zu keiner Absenkung einer bergwärts gerichteten Maschinenrahmenseite kommt und daher Bodenfreiheitsprobleme vermieden werden.

## Patentansprüche

1. Ballenpresse mit einem Fahrwerk (4) zum Abstützen am Boden , einem Aufsammler (5) zum Aufsammeln von Erntegut vom Boden, einem Ballenformer (7) zum Formen des aufgenommenen Ernteguts zu Ballen, sowie einem Wickler (9) zum Umwickeln des Ballens mit einem Netz, einer Folie oder dergleichen, einer Bestimmungseinrichtung zum Bestimmen der Hangneigung sowie einer Steuervorrichtung (20), **dadurch gekennzeichnet, dass** die Steuervorrichtung (20) zum Steuern der Arbeitsgeschwindigkeit des Wicklers (9) und/oder eines zwischen Wickler (9) und Ballenformer (7) vorgesehenen Übergabeförderers (27) in Abhängigkeit der bestimmten Hangneigung vorgesehen ist, wobei Wickelelemente (28) des Wicklers (9) von der Steuervorrichtung (20) mit zunehmender Hangneigung quer zur Fahrtrichtung und/oder zunehmender Hangneigung in Fahrtrichtung zunehmend verlangsamt betreibbar sind und/oder ein Fördermittel (29) des Übergabeförderers (27) von der Steuervorrichtung (20) mit zunehmender Hangneigung quer zur Fahrtrichtung zunehmend verlangsamt betreibbar ist.

2. Ballenpresse nach dem vorhergehenden Anspruch, wobei die Steuervorrichtung (20) die Arbeitsgeschwindigkeit und/oder Beschleunigung des zumindest einen Arbeitswerkzeugs mit zunehmender Hangneigung zunehmend verlangsamt/reduziert.

3. Ballenpresse nach einem der vorhergehenden Ansprüche, wobei das Fördermittel (29), insbesondere Förderschlitten und/oder Förderband, des Übergabeförderers (27) von der Steuervorrichtung (20) mit zunehmender Hangneigung in Fahrtrichtung bergab zunehmend schneller und/oder mit zunehmender Hangneigung in Fahrtrichtung bergauf zunehmend verlangsamt betreibbar ist.

4. Ballenpresse nach einem der vorhergehenden Ansprüche, wobei eine Fangstellung eines/des Fördermittels (29) des Übergabeförderers (27) relativ zum Ballenformer (7), eine Abwurfposition des Fördermittels (29) des Übergabeförderers relativ zum Wickler (9) und/oder eine Fangposition des Wickeltischs (30) des Wicklers (9) relativ zum Übergabeförderer (27) in Abhängigkeit der Hangneigung variabel einstellbar ist.

5. Ballenpresse nach dem vorhergehenden Anspruch, wobei mit zunehmender Hangneigung in Fahrtrichtung bergab der Abstand des Fördermittels (29) des Übergabeförderers (27) vom Ballenformer (7) zunehmend verkleinert und/oder mit zunehmender Hangneigung in Fahrtrichtung bergauf zunehmend vergrößert wird, wobei von der Steuervorrichtung (20) mit zunehmender Hangneigung in Fahrtrichtung bergab der Abstand des Wicklers (9) vom Ballenformer (7) zunehmend verkleinert und/oder mit zunehmender Hangneigung in Fahrtrichtung bergauf zunehmend vergrößert wird.

6. Ballenpresse nach einem der vorhergehenden Ansprüche, wobei eine Hangneigungsausgleichseinrichtung (12) zum Verkippen des Wicklers (9) und/oder des Ballenformers (7) entgegen der Hangneigung des Bodens vorgesehen ist und zumindest einen Querneigungs-Stellaktor (19; 22) zum Verkippen des Ballenformers (7) und/oder des Wicklers (9) quer zur Fahrtrichtung um zumindest eine liegende, sich etwa in Fahrtrichtung erstreckende Querneigungs-Kippachse (14) aufweist.

7. Ballenpresse nach dem vorhergehenden Anspruch, wobei die Hangneigungsausgleichseinrichtung (12) zumindest einen Nickneigungs-Stellaktor (16; 19) zum Verkippen des Ballenformers (7) und/oder des Wicklers (9) um eine liegende, sich quer zur Fahrtrichtung erstreckende Nickneigungs-Kippachse (13) aufweist.

8. Ballenpresse nach einem der beiden vorhergehenden Ansprüche, wobei die Hangneigungsausgleichseinrichtung (12) von der Steuervorrichtung (20) in Abhängigkeit des Betriebszustands des Ballenformers (7) und/oder des Wicklers (9) steuerbar ist.

9. Ballenpresse nach dem vorhergehenden Anspruch, wobei die Steuervorrichtung (20) einen Betätiger (24) zum zeitlich begrenzten Verkippen des Ballenformers (7) und des Wicklers (9) während einer Ballenübergabe von dem Ballenformer (7) an den Wickler (9) und/oder während eines Ballenwickelvorgangs aufweist, wobei die Steuervorrichtung (20) zeitlich außerhalb einer Ballenübergabe und eines Wickelvorgangs die Hangneigungsausgleichseinrichtung (12) deaktiviert oder derart ansteuert, dass der Ballenformer (7) und der Wickler (9) in einer bodenparallelen Neutralstellung gehalten sind.

10. Ballenpresse nach einem der vorhergehenden Ansprüche, wobei das Fahrwerk (4) gegenüber einem Chassisteil (3o), an dem der Ballenformer (7) und/oder der Wickler (9) gelagert sind, höhenverstellbar ausgebildet ist, wobei rechte und linke Fahrwerksteile unabhängig voneinander und/oder gegenläufig zueinander höheneinstellbar ausgebildet sind, wobei das Fahrwerk (4) vorzugsweise als verstellbares Bogey-Fahrwerk ausgebildet ist und Fahrwerksstellaktoren (19) zum Verstellen der Achsträger (18) des Bogey-Fahrwerks einen Teil der Hangneigungsausgleichseinrichtung (12) bilden.

11. Ballenpresse nach einem der vorhergehenden Ansprüche, wobei der Ballenformer (7) und/oder der Wickler (9) und/oder ein Chassis-Oberteil (3o) gegenüber einem vom Fahrwerk (4) getragenen Chassis-Unterteil (3u) verkippbar gelagert ist, wobei der Ballenformer (7) und/oder der Wickler (9) vorzugsweise um eine fest an dem Chassis-Unterteil (3u), das vom Fahrwerk (4) getragen wird, mittig angeordnete Querneigungskippachse (14) verkippbar gelagert ist und zumindest ein Querneigungs-Stellaktor (22) von der genannten Querneigungskippachse (14) beabstandet angeordnet ist.

12. Ballenpresse nach einem der vorhergehenden Ansprüche, wobei der Ballenformer (7) und/oder der Wickler (9) und/oder ein den Ballenformer (7) und den Wickler (9) tragendes Chassis-Oberteil (3o) an zwei voneinander beabstandeten, außermittig angeordneten, liegenden etwa in Fahrtrichtung weisenden Querneigungskippachsen (14) gelagert ist, welche Querneigungskippachsen (14) gegenüber einem vom Fahrwerk (4) getragenen Chassis-Unterteil (3u) höhenverstellbar sind.

13. Ballenpresse nach einem der vorhergehenden Ansprüche, wobei der Ballenformer (7) und/oder der Wickler (9) mit zunehmend stärkerer Hangneigung zunehmend stärker in gegenläufiger Richtung verkippt werden und/oder der Ballenformer (7) und/oder der Wickler (9) derart verkippt werden, dass die genannte Schrägstellung möglichst klein wird.

## Claims

1. Baling press (1) with an undercarriage (4) for the support on the ground, a pickup device (5) for picking up harvested material from the ground, a bale forming device (7) for forming the harvested material picked-up from the ground into bales, as well as with a winding device (9) for enwrapping the bale with a mesh, a film or the like, a determination device for determining the slope of a hillside, as well as with a control device (20), **characterized in that** the control device (20) for controlling the operating speed of the winding device (9) and/or of a transfer conveyor (27) provided between the winding device (9) and the bale forming device (7) is provided depending on the determined slope of the hillside, wherein winding elements (28) of the winding device (9) can be operated by the control device in a manner to be increasingly decelerated as the slope of a hill increases in the driving direction and/or as the slope of a hill increases transversally to the driving direction, and/or a conveying means (29) of the transfer conveyor (27) can be operated by the control device (20) in a manner to be increasingly decelerated as the slope of a hill increases transversally to the driving direction.

2. Baling press according to the preceding claim, wherein the control device (20) increasingly accelerates/decelerates the working speed and/or acceleration of the at least one operating tool as the slope of a hill increases.

3. Baling press according to one of the preceding claims, wherein the conveying means (29), in particular conveyor carriage and/or conveyor belt, of the transfer conveyor (27) can be controlled by the control device (20) in a manner to be operated increasingly faster downhill in the driving direction and/or in a manner to be operated increasingly slower uphill in the driving direction.

4. Baling press according to one of the preceding claims, wherein a catching position of a/the conveying means (29) of the transfer conveyor (27) relative to the bale forming device (7), a discharge position of the conveying means (29) of the transfer conveyor relative to the winding device (9) and/or a catching position of the winding table (30) of the winding device (9) relative to the transfer conveyor (27) can be variably adjusted depending on the slope of a hill.

5. Baling press according to the preceding claim, wherein, as the downward slope of the hill increases in the driving direction downhill, the distance of the conveying means (29) of the transfer conveyor (27) to the bale forming device (7) is increasingly reduced as the slope of a hill increases in the driving direction downhill and/or increasingly enlarged as the hill slope increases in the driving direction uphill, wherein, by means of the control device (20), the distance of the winding device (9) to the bale forming device (7) is increasingly reduced as the slope of the hill increases in the driving direction downhill and/or increasingly enlarged as the hill slope increases in the driving direction uphill.

6. Baling press according to one of the preceding claims, wherein a slope compensation device (12) for tilting the winding device (9) and/or the bale forming device (7) is provided opposite to the slope of the ground and comprises at least one transverse-inclination actuator (19; 22) for tilting the bale forming device (7) and/or the winding device (9) transversely to the driving direction around at least one horizontal, transverse-inclination tilting axis (14) extending approximately in the driving direction.

7. Baling press according to one of the preceding claims, wherein the slope compensation device (12) comprises at least one pitch inclination actuator (16; 19) for tilting the bale forming device (7) and/or of the winding device (9) about a horizontal, transverse-inclination pitch axis (13) extending transversely to the driving direction.

8. Baling press according to one of the two preceding claims, wherein the slope compensation device (12) can be controlled by the control device (20) depending on the operating state of the bale forming device (7) and/or of the winding device (9).

9. Baling press according to one of the preceding claims, wherein the control device (20) comprises an activator (24) for temporarily tilting the bale forming device (7) and the winding device (9) during a transfer of a bale from the bale forming device (7) to the winding device (9) and/or during a bale winding process, wherein the control device (20), in a time period without bale transfer, deactivates the slope compensation device (12) or actuates it in such a way that the bale forming device (7) and the winding device (9) are held in a neutral position parallel to the ground.

10. Baling press according to one of the preceding claims, wherein the undercarriage (4) is configured to be height-adjustable relative to a chassis portion (3o), on which the bale forming device (7) and/or the winding device (9) are supported, wherein left and right chassis portions are formed to be height-adjustable independently from one another and/or opposite to one another, wherein the undercarriage (4) is preferably formed as an adjustable bogey chassis and chassis positioning actuators (19) for adjusting the axle carrier (18) of the bogey chassis form a part of the slope compensation device (12).

11. Baling press according to one of the preceding claims, wherein the bale forming device (7) and/or the winding device (9) and/or a chassis upper part (3o) are supported to be tiltable with respect to a chassis lower portion (3u) supported by the undercarriage (4), wherein the bale forming device (7) and/or the winding device (9) is supported in a manner to be tiltable about a transverse-inclination tilting axis (14) arranged fixedly and centrally to the chassis lower portion (3u) supported by the undercarriage (4), and at least one transverse-inclination positioning actuator (22) is arranged at a distance to the mentioned transverse-inclination tilting axis (14).

12. Baling press according to one of the preceding claims, wherein the bale forming device (7) and/or the winding device (9) and/or a chassis upper portion (3o) supporting the bale forming device (7) and the winding device (9) is supported on two transverse-inclination tilting axes (14), which are spaced from one another and arranged decentralized and directed approximately in the driving direction, which transverse-inclination tilting axes (14) are height-adjustable with respect to a chassis lower portion (3u) supported by the undercarriage (4).

13. Baling press according to one of the preceding claims, wherein, as the hill slope increases, the bale forming device (7) and/or the winding device (9) are tilted increasingly in opposite directions, and/or the bale forming device (7) and/or the winding device (9) are tilted in such a way that the mentioned oblique position becomes as small as possible.

## Revendications

1. Presse à balles comprenant un train de roulement (4) destiné à l'appui au sol, une ramasseuse (5) destinée à ramasser au sol le produit de la récolte, un dispositif de formage de balles (7) destiné à former en balles le produit de récolte ramassé, ainsi qu'un enrouleur (9) destiné à enrubanner la balle avec un filet, une feuille ou similaire, un dispositif de détermination destiné à déterminer la pente ainsi qu'un dispositif de commande (20), **caractérisée en ce que** le dispositif de commande (20) est ménagé pour commander la vitesse de travail de l'enrouleur (9) et/ou d'un convoyeur de transfert (27) ménagé entre l'enrouleur (9) et le dispositif de formage de balles (7) en fonction de la pente déterminée, des éléments d'enroulement (28) de l'enrouleur (9) pouvant être mis en fonction par le dispositif de commande (20) transversalement au sens de marche au fur et à mesure que la pente augmente et/ou dans le sens de marche au fur et à mesure que la pente augmente, en étant progressivement décélérés, et/ou un moyen de transport (29) du convoyeur de transfert (27) pouvant être mis en fonction par le dispositif de commande (20) transversalement au sens de marche au fur et à mesure que la pente augmente, en étant progressivement décéléré.

2. Presse à balles selon la revendication précédente, le dispositif de commande (20) décélérant/réduisant progressivement la vitesse de travail et/ou l'accélération de l'au moins un outil de travail au fur et à mesure que la pente augmente.

3. Presse à balles selon l'une quelconque des revendications précédentes, le moyen de transport (29), notamment le chariot de transport et/ou la bande transporteuse, du convoyeur de transport (27) pouvant être mis en fonction par le dispositif de commande (20) progressivement plus rapidement dans le sens de marche descendant et/ou progressivement de manière décélérée dans le sens de marche montant au fur et à mesure que la pente augmente.

4. Presse à balles selon l'une quelconque des revendications précédentes, une position de prise d'un/du moyen de transport (29) du convoyeur de transfert (27) par rapport au dispositif de formage de balles (7), une position d'éjection du moyen de transport (29) du convoyeur de transfert par rapport à l'enrouleur (9), et/ou une position de prise de la table d'enroulement (30) de l'enrouleur (9) par rapport au convoyeur de transfert (27) étant réglables de manière variable en fonction de la pente.

5. Presse à balles selon la revendication précédente, l'écart du moyen de transport (29) du convoyeur de transfert (27) par rapport au dispositif de formage de balles (7) étant progressivement diminué au fur et à mesure que la pente augmente dans le sens de marche descendant et/ou étant progressivement agrandi au fur et à mesure que la pente augmente dans le sens de marche montant, l'écart de l'enrouleur (9) par rapport au dispositif de formage de balles (7) étant progressivement diminué par le dispositif de commande (20) au fur et à mesure que la pente augmente dans le sens de marche descendant et/ou étant progressivement augmenté au fur et à mesure que la pente augmente dans le sens de marche montant.

6. Presse à balles selon l'une quelconque des revendications précédentes, un dispositif de compensation de pente (12) destiné à basculer l'enrouleur (9) et/ou le dispositif de formage de balles (7) à l'opposé de la pente du sol étant ménagé et présentant au moins un actionneur de réglage de pente transversale (19 ; 22) destiné à basculer le dispositif de formage de balles (7) et/ou l'enrouleur (9) transversalement au sens de marche autour d'au moins un axe de basculement de pente transversale (14) horizontal, s'étendant approximativement dans le sens de marche.

7. Presse à balles selon la revendication précédente, le dispositif de compensation de pente (12) présentant au moins un actionneur de réglage de pente de tangage (19 ; 22) destiné à basculer le dispositif de formage de balles (7) et/ou l'enrouleur (9) autour d'au moins un axe de basculement de pente de tangage (13) horizontal, s'étendant transversalement au sens de marche.

8. Presse à balles selon l'une quelconque des deux revendications précédentes, le dispositif de compensation de pente (12) étant commandable par le dispositif de commande (20) en fonction de l'état de fonctionnement du dispositif de formage de balles (7) et/ou de l'enrouleur (9).

9. Presse à balles selon la revendication précédente, le dispositif de commande (20) présentant un actionneur (24) pour le basculement temporellement limité du dispositif de formage de balles (7) et de l'enrouleur (9) pendant un transfert de balle du dispositif de formage de balles (7) à l'enrouleur (9) et/ou pendant une opération d'enrubannage de balle, le dispositif de commande (20) désactivant le dispositif de compensation de pente (12) temporellement en dehors d'un transfert de balle et d'une opération d'enrubannage ou l'activant de manière à ce que le dispositif de formage de balles (7) et l'enrouleur (9) soient maintenus dans une position neutre parallèle au sol.

10. Presse à balles selon l'une quelconque des revendications précédentes, le train de roulement (4), par rapport à une partie de châssis (3o), sur laquelle le dispositif de formage de balles (7) et/ou l'enrouleur (9) sont logés, étant réalisé de manière réglable en hauteur, des parties droites et gauches du train de roulement étant réalisées de manière réglable en hauteur indépendamment les unes des autres et/ou de manière inverse les unes par rapport aux autres, le train de roulement (4) étant réalisé de préférence comme train de roulement bogey réglable, et des actionneurs de réglage de train de roulement (19) destinés à régler le support d'essieu (18) du train de roulement bogey formant une partie du dispositif de compensation de pente (12).

11. Presse à balles selon l'une quelconque des revendications précédentes, le dispositif de formage de balles (7) et/ou l'enrouleur (9) et/ou une partie supérieure de châssis (3o) étant logés de manière à pouvoir être basculés par rapport à une partie inférieure de châssis (3u) portée par le train de roulement (4), le dispositif de formage de balles (7) et/ou l'enrouleur (9) étant logés de manière à pouvoir être basculés de préférence autour d'un axe de basculement de pente transversale (14) disposé de manière centrale fixe sur la partie inférieure de châssis (3u), qui est portée par le train de roulement (4), et au moins un actionneur de réglage de pente transversale (22) étant disposé avec écart du dit axe de basculement de pente transversale (14).

12. Presse à balles selon l'une quelconque des revendications précédentes, le dispositif de formage de balles (7) et/ou l'enrouleur (9) et/ou une partie supérieure de châssis (3o) portant le dispositif de formage de balles (7) et l'enrouleur (9) étant logés sur deux axes de basculement de pente transversale (14) distancés l'un de l'autre, disposés de manière excentrique, horizontaux, tournés approximativement dans le sens de marche, lesquels axes de basculement de pente transversale (14) sont réglables en hauteur par rapport à une partie inférieure de châssis (3u) portée par le train de roulement (4).

13. Presse à balles selon l'une quelconque des revendications précédentes, le dispositif de formage de balles (7) et/ou l'enrouleur (9) étant basculés de plus en plus en sens inverse au fur et à mesure que la pente devient plus forte, et/ou le dispositif de formage de balles (7) et/ou l'enrouleur (9) étant basculés de manière à ce que ladite position inclinée devienne la plus petite possible.
